# EUROPEAN PATENT APPLICATION

(11) **EP 4 665 028 A2**
(43) Date of publication of application: **17.12.2025**
(21) Application number: 25196415.1
(22) Date of filing: 14.12.2017
(51) Int. Cl.: H04W 72/02

(54) **RADIO NETWORK NODES, WIRELESS DEVICE AND METHODS PERFORMED THEREIN**

(30) Priority: 06.01.2017 WO PCT/CN2017/070364
(62) Divisional of application: 17889689.0
(71) Applicant: Telefonaktiebolaget LM Ericsson (publ), 164 83 Stockholm (SE)
(72) Inventor: Rune, Johan, Stockholm (SE); Zhang, Zhang, Beijing (CN); Reial, Andres, Lund (SE); Da Silva, Icaro Leonardo, Stockholm (SE); Miao, Qingyu, Beijing (CN); Ramos, Edgar, Jorvas (FI); Tidestav, Claes, Stockholm (SE)
(74) Representative: Ericsson

(57) **Abstract**

Embodiments herein relate to a method performed by a radio network node (12) for facilitating beam selection for wireless devices in a wireless communications network. The radio network node obtains a first parameter indicating a mapping between an uplink signal, US, sequence and a beam-formed reference signal, RS, which mapping is for two or more wireless devices that are configured to perform measurements on beam-formed reference signals and to use US sequences to report selected beams, and a second parameter distinguishing the US sequence being reported from one wireless device from the US sequence being reported from one or more other wireless devices. The radio network node further receives an indication of the US sequence transmitted from one of the two or more wireless devices (10); and identifies the beam for the wireless device based on the received indication and the first and second parameters.

## Description

### TECHNICAL FIELD

Embodiments herein relate to radio network nodes, a wireless device and methods performed therein. Furthermore, a computer program and a computer-readable storage medium are also provided herein. In particular, embodiments herein relate to a wireless communications network using beam-formed communications.

### BACKGROUND

In a typical wireless communications network, wireless devices, also known as wireless communication devices, mobile stations, stations (STA) and/or user equipments (UE), communicate via a Radio Access Network (RAN) to one or more core networks (CN). The RAN covers a geographical area and provide radio coverage over service areas or cell areas, which may also be referred to as a beam or a beam group, with each service area or beam being served or controlled by a radio network node such as a radio access node e.g., a Wi-Fi access point or a radio base station (RBS), which in some networks may also be denoted, for example, a "NodeB" or "eNodeB". The radio network node communicates over an air interface operating on radio frequencies with the wireless device within range of the radio network node.

A Universal Mobile Telecommunications network (UMTS) is a third generation (3G) telecommunications network, which evolved from the second generation (2G) Global System for Mobile Communications (GSM). The UMTS terrestrial radio access network (UTRAN) is essentially a RAN using wideband code division multiple access (WCDMA) and/or High Speed Packet Access (HSPA) for user equipments. In a forum known as the Third Generation Partnership Project (3GPP), telecommunications suppliers propose and agree upon standards for third generation networks, and investigate enhanced data rate and radio capacity. In some RANs, e.g. as in UMTS, several radio network nodes may be connected, e.g., by landlines or microwave, to a controller node, such as a radio network controller (RNC) or a base station controller (BSC), which supervises and coordinates various activities of the plural radio network nodes connected thereto. This type of connection is sometimes referred to as a backhaul connection. The RNCs and BSCs are typically connected to one or more core networks.

Specifications for the Evolved Packet System (EPS), also called a Fourth Generation (4G) network, have been completed within the 3^{rd} Generation Partnership Project (3GPP) and this work continues in the coming 3GPP releases, for example to specify a Fifth Generation (5G) network. The EPS comprises the Evolved Universal Terrestrial Radio Access Network (E-UTRAN), also known as the Long Term Evolution (LTE) radio access network, and the Evolved Packet Core (EPC), also known as System Architecture Evolution (SAE) core network. E-UTRAN/LTE is a variant of a 3GPP radio access network wherein the base stations, being radio network nodes, are directly connected to the EPC core network rather than to RNCs. In general, in E-UTRAN/LTE the functions of an RNC are distributed between the radio network nodes, e.g. eNodeBs in LTE, and the core network. As such, the RAN of an EPS has an essentially "flat" architecture comprising radio network nodes connected directly to one or more core networks, i.e. they are not connected to RNCs. To compensate for that, the E-UTRAN specification defines a direct interface between the radio network nodes, this interface being denoted the X2 interface.

Multi-antenna techniques can significantly increase data rates and reliability of a wireless communications network. The performance is in particular improved if both a transmitter and a receiver are equipped with multiple antennas, which results in a Multiple-Input Multiple-Output (MIMO) communication channel. Such systems and/or related techniques are commonly referred to as MIMO. Advanced Antenna Systems (AASs) is an area where technology has advanced significantly in recent years and where we also foresee a rapid technology development in the years to come. Hence it is natural to assume that AASs in general and massive MIMO transmission and reception in particular will be used in a future Fifth Generation (5G) system.

In relation to the AAS, beamforming is becoming increasingly popular and capable and it is not only for transmission of data but also for transmission of control information.

Due to the scarcity of available spectrum for future wireless communications systems, spectrum located in very high frequency ranges, compared to the frequencies that have so far been used for wireless communication, such as 10 GHz and above, are planned to be utilized for future mobile communication systems, e.g. 5G.

For such high frequency spectrum, the atmospheric attenuation, penetration losses and diffraction properties can be much worse than for lower frequency spectrum. In addition, the receiver antenna aperture, as a metric describing the effective receiver antenna area that collects the electromagnetic energy from an incoming electromagnetic wave, is inversely proportional to the frequency squared, i.e., the link budget would be worse for the same link distance even in a free space scenario, if omnidirectional receive and transmit antennas are used. The link budget is accounting of all of the gains and losses from the transmitter, through a medium, to the receiver. This motivates the usage of beamforming to compensate for the loss of link budget in high frequency spectrum. Beamforming may be used at the transmitter, at the receiver, or both. In a large part of the spectrum planned for 5G deployments the preferred configuration is to use a large antenna array at the radio network node such as an Access Node (AN) and a small number of antennas at the wireless device. The large antenna array at the radio network node enables high-order transmit beamforming in the downlink.

For the above reasons, future systems are expected to make heavy use of high-gain, narrow beamforming, which will enable high data rate transmission coverage also to very distant wireless devices which would not realistically be covered with normal sector-wide beams, which have lower antenna gain.

Whenever handover is performed in such a system, for example from one radio network node to another, or from one frequency band to another, then a good beam direction at the handover target, i.e. the new radio network node or the new carrier frequency, towards the wireless device needs to be found in order to sustain high data rate transmission. Furthermore, in systems with very high-gain narrow beamforming, even just performing synchronization or exchanging some initial control signaling messages at the handover, a radio network node may require selection of a sufficiently good beam direction in order for the radio network node and the wireless device to hear each other sufficiently well.

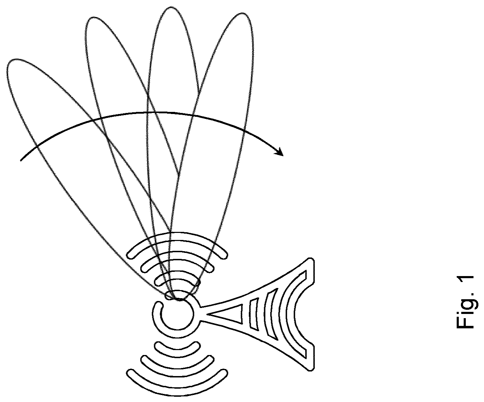

In order to find a good beam direction at a target node of a handover, a beam sweep procedure is typically employed. A typical example of a beam sweep procedure is that the radio network node points a beam, containing a beam-formed reference signal (RS) such as a synchronization signal and/or beam identification signal, in each (reasonably) likely direction, one direction at a time, and the wireless device may report back to the network which beam(s) the wireless device could detect and hear well, see **Fig. 1****.** The beam-formed reference signal to be transmitted for this purpose in a DL beam may be denoted Mobility Reference signal or Mobility and access Reference Signal (MRS). A MRS is defined herein as a concatenation of a Time and frequency Synchronization Signal (TSS) and a Beam Reference Signal (BRS), where the latter explicitly identifies the beam with a beam identifier. The beam sweep of any other beam-formed reference signal that allows the wireless device to make a distinction across multiple beams being swept are also applicable, such as any other synchronization signal followed by another identifier enabling the wireless device to distinguish different beams, e.g. an Synchronization Signal (SS) encoding a cell Identity (ID) followed by an information of Orthogonal Frequency-Division Multiplexing (OFDM) symbol time, allowing the wireless device to distinguish beams in the time domain. A beam sweep may involve one or multiple candidate radio network nodes, e.g. both the current serving radio network node and other radio network nodes, each transmitting one or more candidate beams in the beam sweep, depending on the handover situation. The candidate radio network nodes may be coordinated such that their combined beam transmissions form a single beam sweep. Alternatively, the candidate radio network nodes are loosely coordinated or not coordinated at all, which results in that each candidate radio network node in practice performs its own beam sweep.

Beam reception quality metrics may be e.g. some indication of the received power or Signal to Noise Ratio (SNR). The reporting may be performed either over the already existing connection, with the serving radio network node or serving frequency band, e.g. using Radio Resource Control (RRC) signaling, or signaling over a link using the newly found beam at the target node of the handover. A proposed way to realize this reporting principle is that the wireless device sends an Uplink Signal (US) sequence such as a Uplink Synchronization Signal (USS) sequence in the uplink towards the radio network node from which the selected, e.g. best, beam was received, or possibly to another radio network node or to multiple monitoring radio network nodes. The US sequence may comprise e.g. a sequence that is similar, or equivalent, to a random access preamble, e.g. a Zadoff-Chu sequence, or some other sequence with good autocorrelation and cross-correlation properties. The US sequence can indicate the selected beam by the timeslot in which the US sequence is transmitted, a typical US sequence may be 1, 2 or 3 Orthogonal Frequency-Division Multiplexing (OFDM) symbols long. To support this mode of reporting a number of timeslots, e.g. with a length of 1, 2 or 3 OFDM symbols each, have been configured, each mapping towards one of the beams in the sweep. An alternative way of US based reporting is that there is only one reporting occasion, e.g. timeslot, possibly per source or candidate radio network node, but the sequence used in the US indicates the selected beam through a preconfigured mapping between US sequence and the beam, or actually, a beam-formed reference signal of the beam e.g. between the USS sequence and the MRS.

USSbased reporting, especially the alternative with a single reporting occasion and US sequence to beam or beam-formed RS mapping, is preferable in many handover situations, since it is fast and transmission resource efficient and works even if the wireless device loses its connection with the old serving radio network node during a handover preparation, i.e. during the beam sweep.

The US based reporting that relies on the timeslot of the US transmission to indicate the selected beam becomes undesirably wasteful, since the candidate radio network nodes have to reserve a substantial number of UL timeslots for monitoring the allocated timeslots for US sequence transmissions. In addition, since the wireless device may have to skip a number of timeslots while waiting for the right one to transmit in, i.e. the timeslot that corresponds to the beam that the wireless device is to report/indicate, the entire procedure may be prolonged and this may be emphasized since the radio network node may have to insert gaps in the timeslot sequence, due to other obligations, e.g. switching to DL Time Division Duplex (TDD) operation. Note that TDD operation is expected to be a dominant mode of operation for 5G in high frequencies.

In light of the above problems of relying on timeslots for beam indication in USS based reporting, the alternative US based reporting method using the US sequence, instead of the time slot, to indicate the beam seems preferable.

A beam sweep can be transmitted for a single wireless device, at least in the case of handover, but there are also scenarios where multiple wireless devices may use the same beam sweep, or overlapping beam sweeps, i.e. partially the same MRS transmissions, for instance:
- When multiple wireless devices move in a group and need similar handover support, a radio network node may schedule the same sweep, or overlapping sweeps, of candidate DL beams for all or some of the wireless devices. Similar opportunities to utilize more or less simultaneous handovers of wireless devices may of course arise also without "systematic movements".
- When multiple wireless devices in a Dormant state (such as Inactive state or Idle state) can utilize the same beam sweep when switching to Active state.
- When a beam sweep is statically configured to support all Dormant, Inactive or Idle wireless devices in the vicinity, i.e. the beam sweep is always on, at least while there may be Dormant/Idle wireless devices needing it.

When multiple wireless devices use the same beam sweep, or overlapping beam sweeps it is a problem to differentiate US sequences from the wireless devices and thus this results in an erroneous beam selection, handover or similar. This in its turn results in a limited or reduced performance of the wireless communication network using beam-formed transmissions.

### SUMMARY

An object herein is to provide a mechanism that improves the performance of a wireless communications network when using beam-formed transmissions.

According to an aspect the object is achieved by providing a method performed by a radio network node for facilitating beam selection for wireless devices in a wireless communications network. The radio network node such as a first radio network node obtains a first parameter indicating a mapping between an uplink signal (US) sequence and a beam-formed reference signal (RS), which mapping is for two or more wireless devices that are configured to perform measurements on beam-formed reference signals and to use US sequences to report selected beams. The radio network node further obtains a second parameter distinguishing the US sequence being reported from one wireless device from the US sequence being reported from one or more other wireless devices. The radio network node receives an indication of the US sequence transmitted from one of the two or more wireless devices; and identifies the beam for the wireless device based on the received indication and the first and second parameters.

According to another aspect the object is achieved by providing a method performed by a wireless device for facilitating beam selection in a wireless communications network. The wireless device is configured to perform measurements on beam-formed RS and to use US sequences to report selected beams. The wireless device receives a beam-formed RS. The wireless device performs a transmission of a US sequence to a radio network node, which US sequence is based on a first parameter indicating a mapping between the received beam-formed RS and the US sequence. The wireless device performs the transmission by taking a second parameter into account, which second parameter distinguishes the US sequence being reported from the wireless device from the same US sequence being reported from one or more other wireless devices.

According to yet another aspect the object is achieved by providing a method performed by a radio network node, such as a second radio network node, for facilitating beam selection toward wireless devices in a wireless communications network. The radio network node obtains a first parameter indicating a mapping between a US sequence and a beam-formed RS, which mapping is for two or more wireless devices that are configured to perform measurements on beam-formed reference signals and to use US sequences to report selected beams. The radio network node further obtains a second parameter distinguishing the US sequence being reported from one wireless device, from the US sequence being reported from one or more other wireless devices. The radio network node receives, from one wireless device of the two or more wireless devices, the US sequence; and identifies, for the wireless device, the beam associated to the received US sequence based on the first parameter and the second parameter.

It is herein also provided a computer program comprising instructions, which, when executed on at least one processor, causes the at least one processor to carry out the methods herein, as performed by the wireless device or the radio network nodes. Furthermore, it is herein provided a computer-readable storage medium, having stored thereon a computer program comprising instructions which, when executed on at least one processor, cause the at least one processor to carry out the methods herein, as performed by the wireless device or the radio network nodes.

According to still another aspect the object is achieved by providing a radio network node for facilitating beam selection for wireless devices in a wireless communications network. The radio network node is configured to obtain a first parameter indicating a mapping between an US sequence and a beam-formed RS, which mapping is for two or more wireless devices that are configured to perform measurements on beam-formed reference signals and to use US sequences to report selected beams. The radio network node is further configured to obtain a second parameter distinguishing the US sequence being reported from one wireless device from the US sequence being reported from one or more other wireless devices. The radio network node is configured to receive an indication of the US sequence transmitted from one of the two or more wireless devices; and to identify the beam for the wireless device based on the received indication and the first and second parameters.

According to yet still another aspect the object is achieved by providing a wireless device for facilitating beam selection in a wireless communications network, which wireless device is configured to perform measurements on beam-formed RS and to use US sequences to report selected beams. The wireless device is configured to receive a beam-formed RS; and to perform a transmission of a US sequence to a radio network node, which US sequence is based on a first parameter indicating a mapping between the received beam-formed RS and the US sequence. The wireless device is further configured to perform the transmission by taking a second parameter into account, which second parameter distinguishes the US sequence being reported from the wireless device from the same US sequence being reported from one or more other wireless devices.

According to another aspect the object is achieved by providing a radio network node for facilitating beam selection toward wireless devices in a wireless communications network. The radio network node being configured to obtain a first parameter indicating a mapping between a US sequence and a beam-formed RS, which mapping is for two or more wireless devices that are configured to perform measurements on beam-formed reference signals and to use US sequences to report selected beams. The radio network node further being configured to obtain the second parameter distinguishing the US sequence being reported from one wireless device, from the SS sequence being reported from one or more other wireless devices. The radio network node is configured to receive, from one wireless device of the two or more wireless devices, the US sequence; and to identify, for the wireless device, the beam associated to the received US sequence based on the first parameter and the second parameter.

Therefore the performance of a wireless communications network is improved since the radio network node is enable to differentiate the selected beam (or beam-formed RS) from different wireless devices due to the second parameter e.g. where the wireless devices receives at least one same beam-formed RS, and the radio network node may perform an accurate e.g. handover, beam selection or similar based on the received US sequences.

### BRIEF DESCRIPTION OF THE DRAWINGS

Embodiments will now be described in more detail in relation to the enclosed drawings, in which:
- Fig. 1: is a schematic diagram depicting a beamforming in a wireless communications network according to prior art;
- Fig. 2: is a schematic diagram depicting a wireless communications network according to embodiments herein;
- Fig. 3a: is a combined flowchart and signalling scheme according to embodiments herein;
- Fig. 3b: is a combined flowchart and signalling scheme according to embodiments herein;
- Fig. 4: is a flowchart depicting a method performed by a radio network node according to embodiments herein;
- Fig. 5: is a flowchart depicting a method performed by a wireless device according to embodiments herein;
- Fig. 6: is a flowchart depicting a method performed by a radio network node according to embodiments herein;
- Fig. 7: is a schematic block diagram depicting a radio network node according to embodiments herein;
- Fig. 8: is a schematic block diagram depicting a wireless device according to embodiments herein; and
- Fig. 9: is a schematic block diagram depicting a radio network node according to embodiments herein.

### DETAILED DESCRIPTION

As part of developing embodiments herein one or more problems have been identified. To take full advantage of the possibilities of using a beam sweep, or parts of a beam sweep in case of overlaps, for multiple wireless devices, the involved wireless devices may be configured with beam-formed RS-US sequence (or US sequence-RS) mappings, e.g. MRS-USS mappings, which allow them to report the beam sweep measurement result independently. Measurement result herein meaning e.g. a selection indication i.e. a certain US indicates to the network that the wireless device has heard the beam ID(x) as the strongest beam. In other words, a neighbor radio network node at the wireless communications network should be able to distinguish that multiple wireless devices are selecting and trying to access a certain beam associated with a given beam-formed RS. The radio network node would simply allocate a different SS sequence to each wireless device. However, the number of available SS sequences is limited because of lack of sequences with good enough cross-correlation and autocorrelation properties. The number of mutually orthogonal sequences is typically equal to the sequence length in symbols. Increasing the sequence length would imply higher USS resource usage.

The challenge is further complicated when multiple candidate radio network nodes are involved, not only because of coordination issues, but also because the number of beams in the sweep typically increases with the number of candidate radio network nodes and may sometimes, depending on the situation, be quite large. In general, the number of beam directions that may be included in a sweep depends on several factors, e.g. the number of antennas at the radio network node(s), the number of antennas at the wireless device, the deployment density of the radio network nodes, the number of radio network nodes that may reach the wireless device with beam transmissions, and the uncertainty of the wireless device position and which DL beams to activate.

In some embodiments the wireless communications network is configured with periodic RS transmissions that are beam-formed. In that case, the beam-formed RS to US sequence mapping remains more static than in an aperiodic and/or "on demand" scenario, where the mapping between US sequence and the RS would not necessarily need to be fixed, so that a US Sequence- beam-formed RS mapping reuse could be considered with a lower probability of confusion. Such a periodic beam-formed RS configuration is currently being considered and it might gain momentum in current 3GPP discussions. It should be noted that a mapping may be given wireless devices at a given occasion. For example, the wireless device may receive a US sequence- beam-formed RS mapping valid only for that sweeping scheduling occasion. In the periodic case, a given wireless device receives a given mapping that can be valid until a handover is executed i.e. a validity period where the wireless device is allowed to use that US sequence reporting mechanism. Another UE can receive the same or a different USS-RS mapping at the same time.

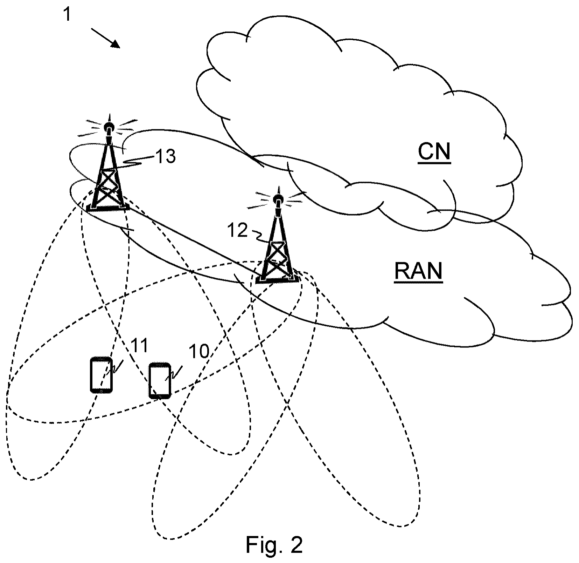

Embodiments herein relate to wireless communications networks in general. **Fig. 2** is a schematic overview depicting **a wireless communications network 1.** The wireless communications network 1 comprises one or more RANs and one or more CNs. The wireless communications network 1 may use one or a number of different technologies, such as Wi-Fi, Long Term Evolution (LTE), LTE-Advanced, 5G, New Radio (NR), Wideband Code Division Multiple Access (WCDMA), Global System for Mobile communications/enhanced Data rate for GSM Evolution (GSM/EDGE), Worldwide Interoperability for Microwave Access (WiMax), or Ultra Mobile Broadband (UMB), just to mention a few possible implementations. Embodiments herein relate to recent technology trends that are of particular interest in a 5G context, however, embodiments are also applicable in further development of the existing wireless communications networks such as e.g. WCDMA and LTE.

In the wireless communications network 1, wireless devices e.g. **a first wireless device 10 and a second wireless device 11,** such as a mobile station, a non-access point (non-AP) STA, a STA, a user equipment and/or a wireless terminals, communicate via one or more Access Networks (AN), e.g. RAN, to one or more core networks (CN). It should be understood by the skilled in the art that "wireless device" is a non-limiting term which means any terminal, wireless communications terminal, user equipment, Machine Type Communication (MTC) device, Device to Device (D2D) terminal, or node e.g. smart phone, laptop, mobile phone, sensor, relay, mobile tablets or even a small base station communicating within a cell.

The wireless communications network 1 comprises **a first radio network node 12,** providing radio coverage over a geographical area, which may be provided by one or more beams or a beam group where the beam is covering the service area of a first radio access technology (RAT), such as NR, 5G, LTE, Wi-Fi or similar. The wireless communications network 1 further comprises **a second radio network node 13** providing radio coverage over a geographical area, which may be provided by one or more beams or a beam group where the beam is covering the service area of a second RAT, such as NR, 5G, LTE, Wi-Fi or similar. The radio network nodes may be transmission and reception points e.g. radio access network nodes such as Wireless Local Area Network (WLAN) access points or Access Point Stations (AP STA), access controllers, base stations e.g. radio base stations such as NodeBs, evolved Node Bs (eNBs, eNode Bs), Next Generation eNode Bs (gNBs, gNodeBs), base transceiver stations, radio remote units, Access Point Base Stations, base station routers, transmission arrangements of a radio base station, stand-alone access points or any other network units capable of communicating with a wireless device within the service area served by the respective radio network node depending e.g. on the radio access technology and terminology used. The radio network node 12 may be referred to as a serving or source radio network node and the second radio network node 13 may be referred to as a neighbouring radio network node or a candidate radio network node. The radio network nodes 12, 13 communicate with the wireless devices with Downlink (DL) transmissions to the respective wireless device and Uplink (UL) transmissions from the respective wireless device.

Beamforming, in particular DL transmit beamforming, is highly relevant for embodiments herein and henceforth the term "beamforming" refers to DL transmit beamforming and "beam" refers to a DL transmit beam, unless specifically stated otherwise.

The radio network nodes may transmit multiple beams, and one or two beam-formed reference signals (RS) per beam e.g. BRSs, MRSs, DL primary synchronization sequences (PSS) and/or DL secondary synchronization sequences (SSS) and or any other signal or signals enabling the wireless device to distinguish and identify different beams (possibly including some payload). The first and second wireless devices are configured to perform measurements on reference signals and to use SS sequences to report results of the measurements. For example, the first wireless device 10 may estimate the received power or quality of the beam-formed reference signals. A beam-formed RS is associated with a port also referred to as an antenna port, i.e. when the first wireless device 10 is performing a measurement using a particular RS, it can be equivalently said that the first wireless device 10 is measuring the RS or a channel of the port that correspond to the particular RS. If the RS is beam-formed, i.e. transmitted with a multi-antenna precoding vector that generates a beam in a certain pointing direction, one can say that the first wireless device 10 is measuring a beam-formed RS or a port of the beam. Since the first radio network node 12 may transmit multiple beams, the first wireless device 10 may measure on multiple beam-formed RSs in sequence or in parallel. The first wireless device 10 may estimate the received strength/power or quality of the reference signals.

The first wireless device 10 may be configured to perform a beam sweep comprising a first number of beams each associated with a beam-formed RS and the second wireless device 11 may be configured to perform a beam sweep comprising a second number of beams each associated with a beam-formed RS. The beam sweeps may comprise one or more same beam-formed RSs may be received by both the wireless devices. It should be noted that embodiments herein primarily targets handover situations but it should be noted that beam sweeps may be performed to support other activities too, such as system information related transmissions, initial network access, beam management procedures (such as beam selection, beam alignment, etc.), as well as wireless device transition from idle to connected state or from dormant (or inactive state) to active state. Potentially, embodiments herein may be used in these procedures too.

According to embodiments herein a radio network node such as the first radio network node 12, may obtain, such as receive or determine or being configured with, a first parameter indicating a mapping between an US sequence and a beam-formed RS for e.g. the first wireless device 10 and the second wireless device 11 having same beam-formed RSs to monitor such as being configured with overlapping beam sweeps associated to at least one same beam-formed RS. The first radio network node 12 further obtains a second parameter distinguishing the US sequence being reported from one wireless device from the US sequence being reported from another wireless device. The second parameter may be e.g.: separate US transmissions in time; separate US transmissions in frequency; separate US transmissions using scrambling of the US transmissions; and/or separate US transmissions by complementing the transmitted US sequences with identity of the wireless devices. The first wireless device 10 may receive one or more beam-formed RSs and may report the one beam-formed RS it receives with a best quality, e.g. a highest Signal to Noise Ratio (SNR), a highest Signal to Interference plus Noise Ratio (SINR), or highest power e.g. measured as Reference Signal Received Power (RSRP). According to embodiments the first wireless device 10 receives the beam-formed RS and performs a transmission to e.g. the first radio network node 12, of the US sequence mapped to the beam-formed RS, or in case of multiple received beam-formed RSs when the beam-formed RS is a best received beam-formed RS. The transmission is performed taking the second parameter into account thereby distinguishing the US sequence from the US sequence being transmitted from e.g. the second wireless device 11. The first radio network node 12 thus receives the US sequence from the first wireless device 10 and identifies the beam of the beam-formed RS based on the first and second parameter e.g. by identifying the US sequence to belong to the first wireless device 10 and to the reference signal of the beam based on the first and second parameter. Hence, the first radio network node 12 may receive a respective transmission from the first wireless device 10 and the second wireless device 11, each comprising the US sequence, e.g. in case the first and second wireless devices select the same beam-formed RS. The first radio network node 12 may identify the respective transmission to belong to the first and the second wireless device from the received US sequences based on the mapping according to the first parameter and the second parameter.

Embodiments herein provide an efficient coordination of configuration of MRS-US-RS mappings and reporting resources for UEs measuring on the same DL beam sweep, thereby enabling the UEs to report their measurement results independently using USS based reporting.

As stated above the second parameter distinguishes the US sequence being reported from one wireless device from the US sequence being reported from another wireless device. Thus, the second parameter indicates a separation of a same US sequence being reported from two or more wireless devices distinguishing the same SS sequence from one another.

As a first example, the second parameter may be a time offset, which separates, in time, transmissions of the US sequence from the two or more wireless devices. When the mapping of US sequences and the beam-formed RSs is the same for all wireless devices measuring on the DL beam sweep the second parameter separates the wireless devices' respective US sequences, by configuring the wireless devices with different timeslots for sending the US sequence. If indications indicating the time offset, e.g. countdown indications, in the RS transmissions are used, each wireless device is configured with a time offset to apply to a time of transmitting the US sequence mapped to the beam-formed RSs. The e.g. first radio network node 12 may configure the first wireless device 10 with this time offset via RRC signaling. For dynamically configuring wireless devices with a changing first parameter, the time offset indication may be sent in conjunction with transmission of updated first parameter. The second parameter may be an integer indicating the number of OFDM symbols until the time when the USS sequence should be sent. For example, if one beam or direction is transmitted in each OFDM symbol, the integer in each successive beam would be one smaller than in the previous beam, and could therefore be referred to as a countdown indication or countdown field.

As a second example, the second parameter may be a frequency offset, which separates, in frequency, transmissions of the US sequence from the two or more wireless devices. When the mapping of US sequences and the beam-formed RSs is the same for all wireless devices measuring on the DL beam sweep the second parameter separates the wireless devices' respective US sequences, by configuring the wireless devices with different frequencies, e.g. subcarriers, for sending the US sequence.

As a third example, the second parameter may be an indicator to use a certain scrambling sequence, or function for each wireless device, resulting that different wireless devices apply different scrambling of the US sequence and thereby distinguishing the US sequences being reported from the two or more wireless devices. For example, the US sequence transmissions from different wireless devices are separated through scrambling, where different wireless devices scramble their respective US sequence with different scrambling sequences. A scrambling sequence may be allocated to each wireless device to be used for scrambling of the US sequence during transmission. The scrambling sequence may be allocated to each wireless device for each specific beam sweep measurement, and a unique scrambling sequence may be allocated to each wireless device measuring on the same beam sweep. As long as the scrambling sequences are unique among the wireless devices measuring on the same beam sweep, the scrambling sequences may be selected randomly or pseudo-randomly. Such scrambling sequences will typically have low but non-zero cross-correlations, inversely proportional to the sequence length. Since some combinations of scrambling sequences will allow better signal reception/separation than other scrambling sequences, a preferred subset may be selected out of which the scrambling sequences are allocated, as opposed to using any random scrambling sequence. When the radio network node receives the scrambled US sequence, the radio network node takes the scrambling sequence or function into account to identify the beam, e.g. uses the scrambling sequence or function to descramble the scrambled US sequence. If different scrambling is used for different wireless devices, the second parameter may be used to choose one out of many scrambling sequences or potentially scrambling functions.

As a fourth example, the second parameter may be an indication to use the identity of each wireless device to distinguish the US sequences being transmitted from the two or more wireless devices. For example, the US sequence transmission may be complemented with the identity of the first wireless device 10, i.e. US sequence+ID is transmitted instead of just the US sequence. This allows the mapping between the US sequences and the RSs to be the same for all involved wireless devices. The identity could be any identity associated with the wireless device:
- An identity temporarily assigned to the wireless device for a certain beam sweep measurement.
- An already allocated identity, e.g. the Medium Access Control - identity (MAC-ID) or a C-RNTI, which may have been allocated by the source radio network node.
- An already allocated identity with a longer lifetime, e.g. the TMSI, Serving TMSI or a corresponding core network wireless device identifier.
- An identifier pre-allocated by the candidate radio network node e.g. a MAC-ID or C-RNTI.
The US sequence enables coherent decoding of the identity of the wireless device.

It should be noted that all the examples above may be used in any combination. For example, if so many wireless devices are involved that a frequency band is not enough, additional separation means, e.g. time offset may be used as complement. Hence, a combination of any different second parameters may be used to separate the US sequence.

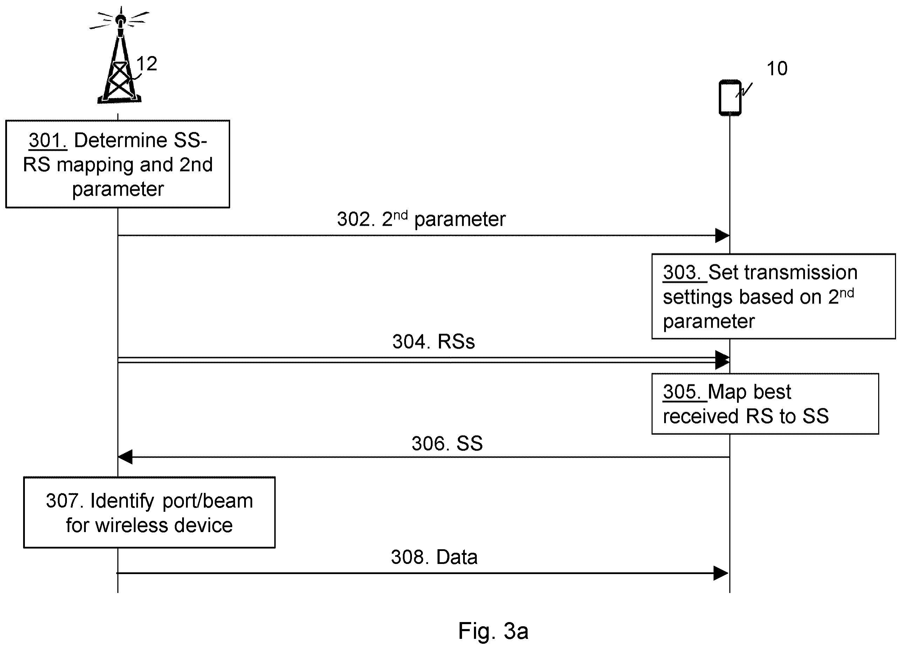

**Fig. 3a** is a sequence diagram depicting an example of embodiments herein when the first wireless device 10 receives the beam-formed RS from the first radio network node 12. The US sequence is exemplified as a synchronization signal (SS) sequence such as an Uplink SS (USS) sequence.

**Action 301.** The first radio network node 12 may determine the first parameter indicating the SS-RS mapping and the second parameter e.g. frequency or time offset. The second parameter distinguishes the US sequence being reported from one wireless device from the US sequence being reported from another.

**Action 302.** The first radio network node 12 may transmit the first and/or second parameter (configuration) to the first wireless device 10. Hence, the first radio network node 12 may transmit configuration data towards the wireless device such as the second parameter e.g. in case the first wireless device 10 already knows the first parameter e.g. being preconfigured at the first wireless device 10. The first wireless device 10 may further be configured to perform beam sweeps monitoring a number of beam-formed RSs. It should be understood that the first wireless device 10 may obtain the first parameter and/or the second parameter internally or externally, e.g. being preconfigured with the first parameter and receive the second parameter from a radio network node or the other way around.

**Action 303.** The first wireless device 10 may adjust or set-up transmission settings based on the received second parameter. For example, it may adjust frequency, time slot, and/or scramble the US sequence transmissions.

**Action 304.** The first radio network node 12 may transmit RSs in different beams e.g. towards the first wireless device 10.

**Action 305.** The first wireless device 10 may respond to reception of the beam-formed RSs by mapping a best received beam-formed RS e.g. beam-formed RS with strongest signal strength or best signal quality, to the SS sequence as defined by the first parameter.

**Action 306.** The first wireless device 10 then performs the transmission of the SS sequence taking into account or based on the second parameter.

**Action 307.** The first radio network node 12 receives the SS sequence and identifies the selected RS based on the first and second parameters. For example, the first radio network node may receive the SS sequence, which SS sequence uses a scrambling code/frequency offset/time offset/ID as defined in the stored second parameter. Thus, the first radio network node 12 uses the determined first and second parameter to identify the beam for the wireless device 10. The first radio network node may then determine to use or select the identified beam. It may select another beam based on previous transmissions or other reasons.

**Action 308.** The first radio network node 12 may then use the identified beam for transmissions.

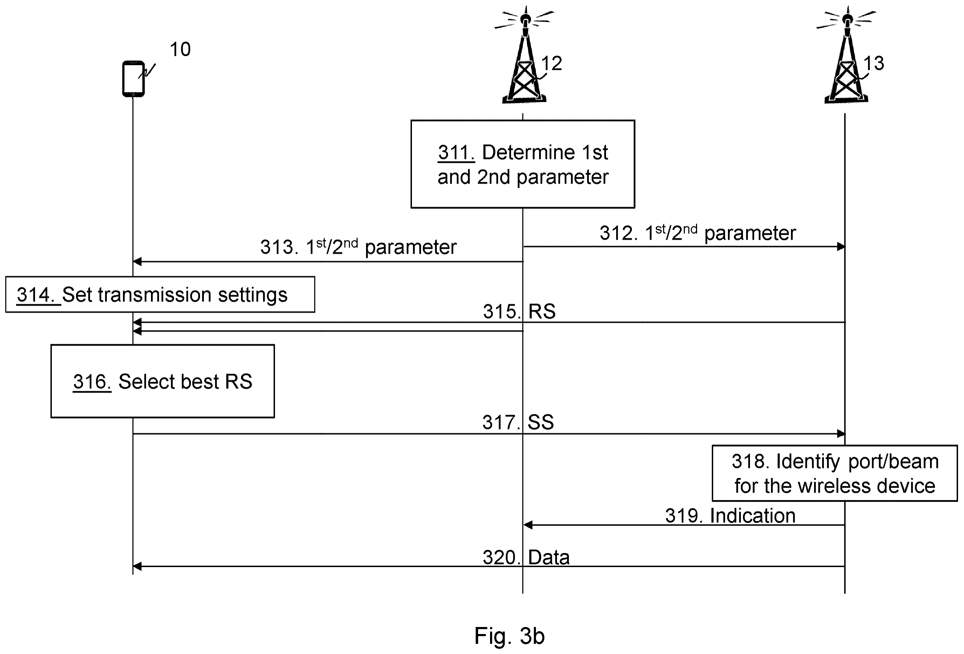

**Fig. 3b** is a sequence diagram depicting an example of embodiments herein when the first wireless device 10 receives the beam-formed RS from the second radio network node 13. The US sequence is exemplified as a SS sequence such as an USS sequence

**Action 311.** The first radio network node 12, also known as the source radio network node, may determine the first parameter indicating the SS-RS mapping and the second parameter e.g. frequency or time offset. The second parameter distinguishes the US sequence being reported from one wireless device from the US sequence being reported from another. This corresponds to action 301 in Fig 3a.

**Action 312.** The first radio network node 12 may transmit the first and/or second parameter to the second radio network node 13 also referred to as the candidate radio network node.

**Action 313.** The first radio network node 12 may transmit the first and/or second parameter (configuration) to the first wireless device 10. This corresponds to action 302 in Fig 3a. It should be understood that the first wireless device 10 may obtain the first parameter and/or the second parameter internally or externally, e.g. being preconfigured with the first parameter and receive the second parameter from a radio network node or the other way around.

**Action 314.** The first wireless device 10 may adjust or set-up transmission settings based on the received second parameter. For example, it may adjust frequency, time slot/frequency, and/or scramble the US sequence transmissions. This corresponds to action 303 in Fig 3a.

**Action 315.** The first radio network node 12 and the second radio network node may transmit RSs in different beams e.g. towards the first wireless device 10.

**Action 316.** The first wireless device 10 selects a best beam-formed RS e.g. beam-formed RS with strongest signal strength or best signal quality.

**Action 317.** The first wireless device 10 then maps the selected RS to the SS sequence as defined by the first parameter and then performs the transmission of the SS sequence taking into account or based on the second parameter. For example, the first wireless device 10 transmits the SS sequence at a time/frequency or scrambled according to the second parameter. This corresponds to actions 305 and 306 in Fig 3a.

**Action 318.** The second radio network node 13 receives the SS sequence and identifies the selected RS for the first wireless device 10 based on the first and second parameters. The second radio network node 13 may then determine to use/select the identified beam or not.

**Action 319.** The second radio network node 13 may further indicate to the first radio network node 12 of the identified and used beam.

**Action 320.** The second radio network node 13 may use the identified beam for transmissions.

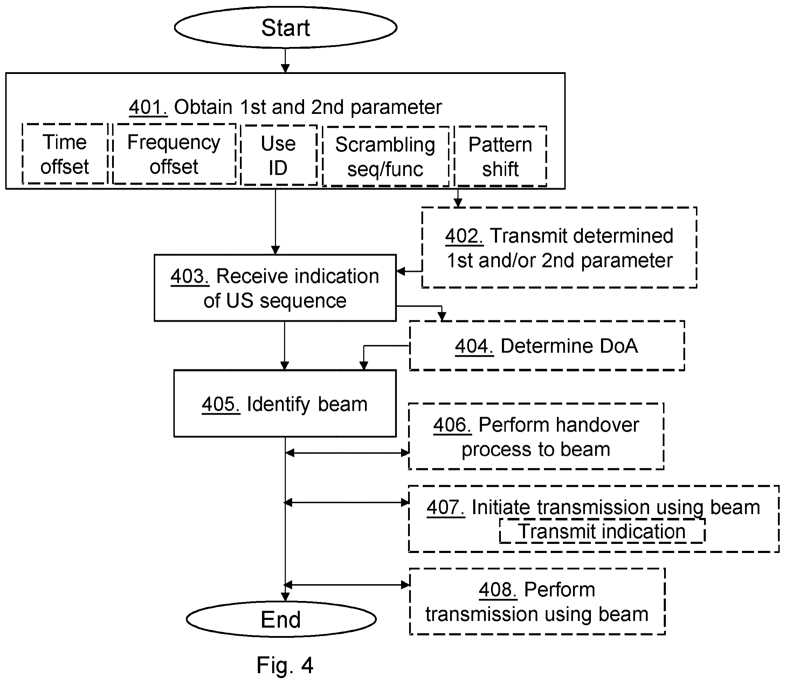

**Fig. 4** is a flowchart depicting a method performed by a radio network node such as the first radio network node 12 for facilitating beam selection for wireless devices in the wireless communications network 1. The actions do not have to be taken in the order stated below, but may be taken in any suitable order. Actions performed in some embodiments are marked with dashed boxes.

**Action 401.** The first radio network node 12 obtains the first parameter indicating the mapping between the US sequence and the beam-formed RS. The mapping is for two or more wireless devices, e.g. the first and second wireless devices, are configured to perform measurements on beam-formed reference signals and to use US sequences to report selected beams. The first radio network node 12 further obtains the second parameter distinguishing the US sequence being reported from one wireless device from the US sequence being reported from another wireless device. The second parameter may thus indicate a separation of a same US sequence being reported from the two or more wireless devices distinguishing the same SS sequence from one another. The first radio network node 12 may in some embodiments determine the first parameter and the second parameter to configure other radio network nodes and/or wireless devices. The second parameter may be a time offset, which separates, in time, transmissions of the US sequence from the two or more wireless devices. The time offset may be a RS timing (or any other timing associated to the beamformed RS, separating the RS is time for the different wireless devices). In that case, time does not need to be provided.. The second parameter may be a frequency offset, which separates, in frequency, transmissions of the US sequence from the two or more wireless devices. The frequency offset may be based on a RS frequency or any other DL RS signal, not even the one beam-formed e.g. it could be the DL RS used for initial access, separating the RS is frequency for the different wireless devices. The second parameter may be an indication to use an identity of each wireless device to distinguish the US sequences being reported from the two or more wireless devices. The identity of each wireless device may be a temporary identity allocated by the radio network node or a globally unique identity. The second parameter may be an indicator to use a scrambling sequence or function for each wireless device, which scrambles the US sequence differently for each wireless device and thereby making the US sequences reported from the two or more wireless devices distinguishable. Thus, the time offset, the frequency offset, ID and/or scrambling sequence/function may distinguish the US sequences being reported from the two or more wireless devices. In addition, the first radio network node may obtain that the US sequence is further mapped to a second RS of a second beam. The second parameter may be a pattern shift of the mapping which pattern shift is based on the identity of the two or more wireless devices and thereby distinguishing the US sequences being reported from the two or more wireless devices. The wireless devices may be configured to perform a respective beam sweep and the beam-formed RS may be included in one or more beam sets the two or more wireless devices are being configured to perform measurements on.

**Action 402.** The first radio network node 12 may determine the first parameter and the second parameter, and the first radio network node 12 may then transmit the determined first parameter and/or the second parameter to the first wireless device 10 and/or another radio network node such as the second radio network node 13. Thus, the first radio network node 12 may configure the wireless communication network with the determined first and second parameters. For example, the first radio network node 12 informs candidate radio network nodes of the mapping of the US sequence and RS, and also the type and properties of the US sequence reporting that the wireless device is configured with. Thus, the candidate radio network nodes are configured correspondingly and know what reporting to expect and how to interpret it. The first and/or the second parameter may be transmitted using signaling over the radio interface to the wireless device. Hence, the configuration data needed may be conveyed from the first radio network node 12 to the first wireless device 10 via RRC signaling, or possibly a lower layer protocol, such as MAC signaling. For cases where the mechanisms are used for Dormant/Inactive or Idle wireless devices, the information is preferably sent to the wireless devices by the serving radio network node before the wireless device is switched to Dormant/Inactive/Idle state. For cases where the mapping is the same for all involved wireless devices, an alternative is to convey the first parameter to the wireless devices via broadcast (or unicast) system information, while the second parameter, which enables the separation, is individually signalled for each wireless device.

The first and/or the second parameter may be transmitted using signaling between radio network nodes in order to coordinate the RS and US sequence resources/mapping among radio network nodes over an inter-node interface, X2-like interface. Each radio network node might own its own UL/DL resources e.g. in a distributed architecture. In such a case, coordination is needed between the source and candidate radio network nodes. The candidate radio network nodes may allocate the mapping and the source radio network node such as the first radio network node 12 may retrieve this mapping information from the candidate radio network nodes. If some specific distinction pattern/modification to differentiate wireless devices is to be applied by the involved wireless devices, related second parameter has to be exchanged between the source and candidate radio network nodes also for this purpose, e.g. which algorithm/pattern to use and/or identities of the wireless devices to derive the pattern/modification from, e.g. sent from the source radio network node to the candidate radio network nodes or from the candidate radio network nodes to the source radio network node.

**Action 403.** The first radio network node 12 further receives the indication of the US sequence transmitted from one of the wireless devices. The indication may be received from the first wireless device 10 or from another radio network node such as the second radio network node 13. The indication may be the US sequence itself or an index or identity associated with the US sequence such as beam ID, US index, or similar. The first radio network node 12 may in some embodiments receive the indication of the US sequence by receiving the US sequence scrambled with the scrambling sequence or function. The indication of the US sequence may also be referred to as an indication of the beam associated with the US sequence. Furthermore, the first radio network node may further receive an indication or second indication indicating the second parameter, e.g. the second indication may indicate frequency offset, Identity of the wireless device, time offset or scrambling sequence or function. The second indication may be received from the wireless device or the second radio network node 13.

**Action 404.** The first radio network node 12 may when the first radio network node obtains that the US sequence is further mapped to a second RS of a second beam, determine a direction of arrival of the received US sequence.

**Action 405.** The first radio network node 12 identifies the beam for the wireless device based on the received indication and the first and second parameters. E.g. the first radio network node 12 may identify the US sequence to belong to the beam-formed reference signal and to the first wireless device 10 based on the first and second parameter. The first radio network node may, when the second parameter is the indication to use the identity of each wireless device to the US sequence, identify the beam further based on the identity of the wireless device. The first radio network node 12 may identify the beam by taking the scrambling sequence or function into account. Hence, the first radio network node may identify the US sequence to belong to the wireless device and to the beam-formed RS of the beam based on the ID of the wireless device and/or the scrambling sequence/function.

The first radio network node 12 may identify, when the US sequence is further mapped to the second beam-formed RS, whether the US sequence belongs to the beam-formed RS or the second beam-formed RS based on the determined direction of arrival. For example, each wireless device may be allocated a separate disjoint set of US sequences for reporting a result of the beam sweep measurement, but to counteract the need for an excessive number of different US sequences, and the consequent risk of depletion of the available US sequences, the US sequences may be spatially reused, so that a smaller number of US sequences are needed. For instance, a set of US sequences is allocated for reporting of the first half of the beam-formed RSs in a beam sweep and the same set of US sequences is used for reporting of the second half of the beam-formed RSs in the beam sweep. More concretely, assume for instance sixteen beams in the beam sweep, then eight US sequences may be allocated to each of the wireless devices for reporting of the eight first beam-formed RSs in the beam sweep and each wireless device would use the same eight US sequences for reporting of the eight last beam-formed RSs in the beam sweep. Dividing the beams in the beam sweep into more than two groups is also possible by increasing the spatial reuse of the US sequences.

When receiving a certain US sequence in time/frequency resources, the receiving radio network node such as the first radio network node 12 may determine the direction of arrival of the US sequence and the first radio network node 12 may use this direction to determine which RS transmission the US sequence indicates. For instance, US1 may be allocated for reporting of both RS1 and RS9 and when the first radio network node 12 receives US1 as a report, the first radio network node 12 compares its direction of arrival with the respective direction of transmission of RS1 and RS9 and interprets the US1 as indicating the one of the RSs whose direction of transmission is the closest to the opposite of the direction of arrival of US1. This method to reduce the number of required unique US sequences can of course be used also when there is only a single wireless device measuring on the beam sweep, e.g. in conjunction with very large beam sweeps.

**Action 406.** The first radio network node 12 may, when receiving the indication of the US sequence from another radio network node such as the second radio network node 13, perform a handover procedure of the wireless device to the identified beam based on the received indication.

**Action 407.** The first radio network node 12 may initiate the transmission toward the wireless device using the identified beam. The first radio network node 12 may initiate the transmission by transmitting an indication of the US sequence for the wireless device to another radio network node such as the second radio network node 13. The indication may be a beam indication associated with the beam-formed RS mapped to the received US sequence and may be transmitted to a radio network node controlling the beam.

**Action 408.** The first radio network node 12 may, when receiving the indication comprises receiving the US sequence from the first wireless device 10, perform the transmission toward the wireless device using the identified beam also being referred to as the beam being associated with the identified US sequence.

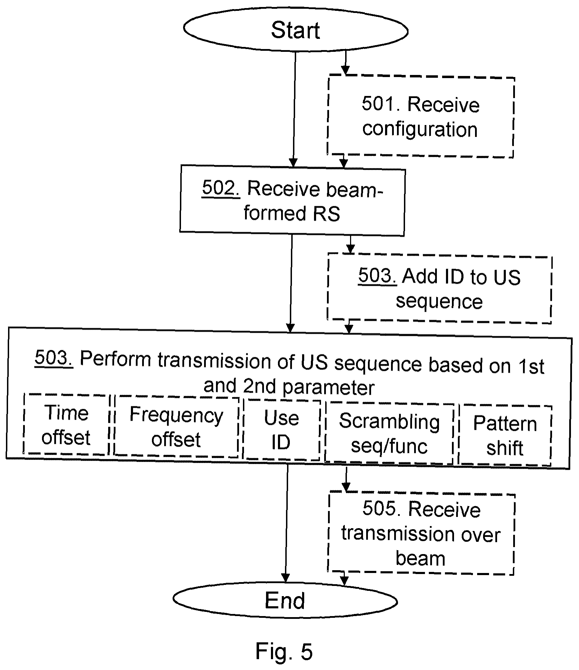

**Fig. 5** is a flowchart depicting a method performed by the first wireless device 10 for facilitating beam selection in a wireless communications network 1. The first wireless device 10 is configured to perform measurements on beam-formed RSs and to use US sequences to report selected beams. E.g. the first wireless device 10 may be configured to perform measurements on one or more beam-formed RS. The actions do not have to be taken in the order stated below, but may be taken in any suitable order. Actions performed in some embodiments are marked with dashed boxes.

**Action 501.** The first wireless device 10 may receive configuration, e.g. from a radio network node such as the first radio network node 12 or the second radio network node 13, which configuration comprises the first parameter and/or the second parameter. It should be understood that the first wireless device 10 may obtain the first parameter and/or the second parameter internally or externally, e.g. being preconfigured with the first parameter and receive the second parameter from a radio network node or the other way around. Hence, the second parameter may (for at least for a given mobility session) be configured explicitly over network signaling e.g. RRC and/or Medium Access Control (MAC) signaling. Another alternative is to generate this second parameter e.g. unique time/frequency offsets and/or scrambling codes and/or scrambling parameters from a unique identifier of the wireless device, known at the wireless device and/or provided by the radio network node, e.g. International Mobile Subscriber Identity (IMSI), Temporary Mobile Subscriber Identity (TMSI), Cell Radio Network Temporary Identifier (C-RNTI), MAC-ID, etc., so that different wireless devices will have unique offsets, scrambling sequences, etc.

**Action 502.** The first wireless device 10 receives a beam-formed RS. It should be understood that the first wireless device 10 may receive a number of beam-formed RSs e.g. a second beam-formed RS, and select the beam-formed RS based on measured signal strength or quality such as SINR, SNR or RSRP.

**Action 503.** The first wireless device 10 may add the identity (ID) of the first wireless device 10 to the US sequence mapped to the received beam-formed RS in case the second parameter indicates the use of identity of the first wireless device 10. The identity may be a temporary identity allocated by the radio network node or a globally unique identity.

**Action 504.** The first wireless device 10 performs the transmission of the US sequence, e.g. to the radio network node such as the first or the second radio network node depending on which radio network node transmits the beam-formed RS. The US sequence is based on the first parameter indicating the mapping between the received beam-formed RS and the US sequence, e.g. when the first wireless device 10 selects the beam-formed RS, e.g. based on signal strength, the beam-formed RS is mapped to the US sequence as defined by the first parameter. The first wireless device 10 performs the transmission by taking the second parameter into account, which second parameter distinguishes the US sequence being transmitted from the first wireless device 10 from the same US sequence being reported from one or more other wireless devices. E.g. the first wireless device 10 may, when the second parameter is a time offset, perform the transmission by transmitting the US sequence at a time based on the time offset. Additionally or alternatively, the first wireless device 10 may, when the second parameter is a frequency offset, perform the transmission by transmitting the US sequence in a frequency based on the frequency offset. The second parameter may be the indication to use the identity of the first wireless device 10 and then the first wireless device 10 may perform the transmission by transmitting the US sequence with the added ID. The second parameter may be the scrambling sequence or function e.g. a scrambling sequence, for the wireless device and then the first wireless device 10 may perform the transmission by scrambling the US sequence using the scrambling sequence or function. It should be noted that the first wireless device 10 may be configured to use the US sequence also for a second beam-formed RS of a second beam and the first wireless device 10 may then perform the transmission by transmitting the US sequence when deciding to report the first beam-formed RS or the second beam-formed RS. It is then up to the radio network node receiving the US sequence to determine which beam-formed RS is mapped to the US sequence based on direction of arrival (DoA) as stated in action 404.

**Action 505.** The first wireless device 10 may then receive a transmission over the beam corresponding to the transmitted US sequence. E.g. the beam corresponding to the selected beam-formed RS is used for data transmission to the first wireless device 10.

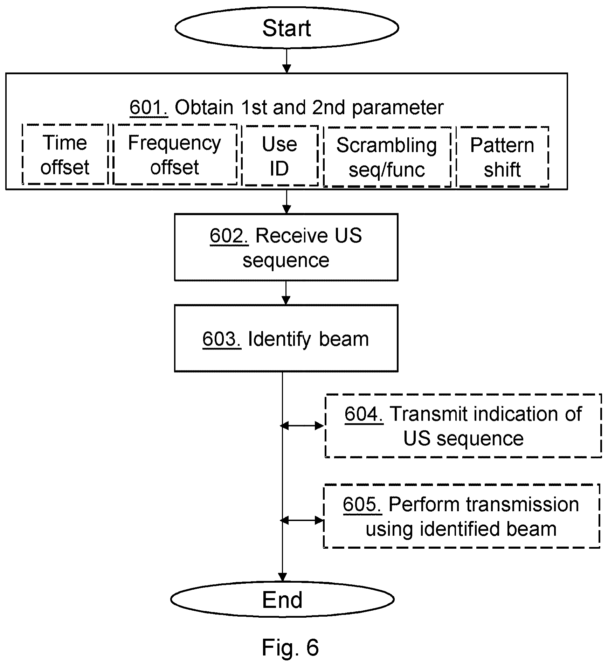

The method actions performed by a radio network node, exemplified herein as the candidate or second radio network node 13, for facilitating beam selection toward wireless devices the wireless communication network 1 according to some embodiments will now be described with reference to a flowchart depicted in **Fig. 6****.** The actions do not have to be taken in the order stated below, but may be taken in any suitable order. Actions performed in some embodiments are marked with dashed boxes.

**Action 601.** The candidate radio network node obtains the first parameter indicating the mapping between the US sequence and the beam-formed RS, which mapping is for two or more wireless devices that are configured to perform measurements on beam-formed reference signals and to use US sequences to report selected beams. Furthermore, the candidate radio network node obtains the second parameter distinguishing the US sequence being reported from one wireless device from the US sequence being reported from one or more other wireless devices. E.g. the candidate radio network node may receive the first parameter and/or the second parameter from a source radio network node such as the first radio network node 12 in the wireless communications network e.g. as configuration data.

**Action 602.** The candidate radio network node receives, from one wireless device of the two or more wireless devices, the US sequence.

**Action 603.** The candidate radio network node further identifies, for the first wireless device 10, the beam associated to the received US sequence based on the first parameter and the second parameter.

**Action 604.** The candidate radio network node may transmit to the source radio network node the indication of the identified beam associated with the received US sequence. The candidate radio network node may further transmit the indication or second indication indicating the second parameter, e.g. the second indication may indicate frequency offset, Identity of the wireless device, time offset or scrambling sequence or function. The second indication may be transmitted to the first second radio network node 12.

**Action 605.** The candidate radio network node may further perform the transmission toward the wireless device using the identified beam. For example, upon receiving a given US sequence associated with (one of) its beam-formed RS, the candidate radio network node identifies the originating wireless device and continues the procedures e.g. by informing the source radio network node and/or initiating communication with the first wireless device 10.

It should be noted that each wireless device may be allocated a separate disjoint set of US sequences for reporting the result of the beam sweep measurement. This solution may be combine with the use of the second parameter depending on the number of wireless devices. For instance, if three wireless devices are to measure on the beam sweep, two of them may receive disjoint USS sets, while the third UE may receive the same USS set as one of the others, but instead be configured with the second parameter such as another timeslot or frequency range for the US sequence transmission.

The first radio network node may allocate the US sequences for the beam sweep. Each radio network node may have a locally unique set of US sequences. By allocating the US sequences for the beam sweep reporting from its own dedicated, locally unique set of US sequences, the first radio network node 12 can guarantee local uniqueness of the US sequences and independent, collision-free US sequence reporting as long as there are enough US sequences to serve multiple UEs. However, providing a locally unique set of US sequences for each radio network node may require geographical reuse of the US sequences of the sets. This in turn requires manual or Operation and Maintenance (O&M) software based US sequence planning or that the same result is achieved through a distributed Self-Organizing Network (SON) function, e.g. based on inter-radio network node coordination through information exchange, possibly assisted by wireless devices. An alternative is that the US sequences are selected from a common network-wide pool of US sequences. To avoid inter-radio network node coordination of US sequence allocations to eliminate the risk for US sequence collisions, one may instead accept the risk of US sequence collision, since the probability of allocation of the same US sequence for the same time and frequency resources is in many scenarios fairly small and may possibly be considered acceptable.

The allocation of the US sequences done by the first radio network node 12 to the beam sweep can be done via dedicated signaling for each wireless device. Alternatively, a common channel can be used to inform a default mapping between US sequence and beam-formed RS and, based on the identity of the wireless device the first wireless device 10 can generate a shift pattern to alter the mapping, so that it can select a US sequence for a given beam-formed RS that is different from the US sequences of other wireless devices to further reduce the collision probability. Such a common channel can for example be a channel for broadcasting system information. For example, a radio network node can transmit MRS-USS sequence mapping information in the system information in the following form:
MRS A - USS 1
MRS B - USS 2
MRS C - USS 3
MRS D - USS 4

All wireless devices connected to or camping on (or otherwise monitoring the broadcast system information of) that radio network node can read this mapping information. Then, based on the ID of the wireless device (which could either be globally/network-wide unique or valid only in a limited area such as that radio network node) a given wireless device, as an example, derives a pattern shift of zero so that if it selects MRS A, it will report USS1 or if it selects MRS B it will report USS 2 etc. Meanwhile, another wireless device derives a pattern shift of 2 and uses USS 3 for MRS A and USS 4 for MRS B. Thus the wireless device may use a pattern shift to separate USSs for same RS.

Each radio network node may have a locally unique set of US sequences and the candidate radio network node may allocate the US sequences for the beam sweep. Each candidate radio network node allocates the US sequences to be used for reporting of the RS(s)/beam(s) the candidate radio network node transmits in the beam sweep. Since these/this US sequence(s) is/are selected from the candidate radio network node's locally unique set of US sequences, collision-free US sequences are ensured. Thus, herein is a method disclosed performed by the radio network node 12 wherein the radio network node obtains the first parameter indicating the mapping between the US sequence and the beam-formed RS. The mapping is for two or more wireless devices that are configured to perform measurements on beam-formed reference signals, and to use US sequences to report selected beams and a second parameter distinguishing the US sequence being reported from one wireless device from the US sequence being reported from one or more other wireless devices. The radio network node receives the indication of the US sequence transmitted from one of the two or more wireless devices 10, and an indication of the second parameter. The radio network node then identifies the beam and the wireless device based on the received indication and the first and second parameters.

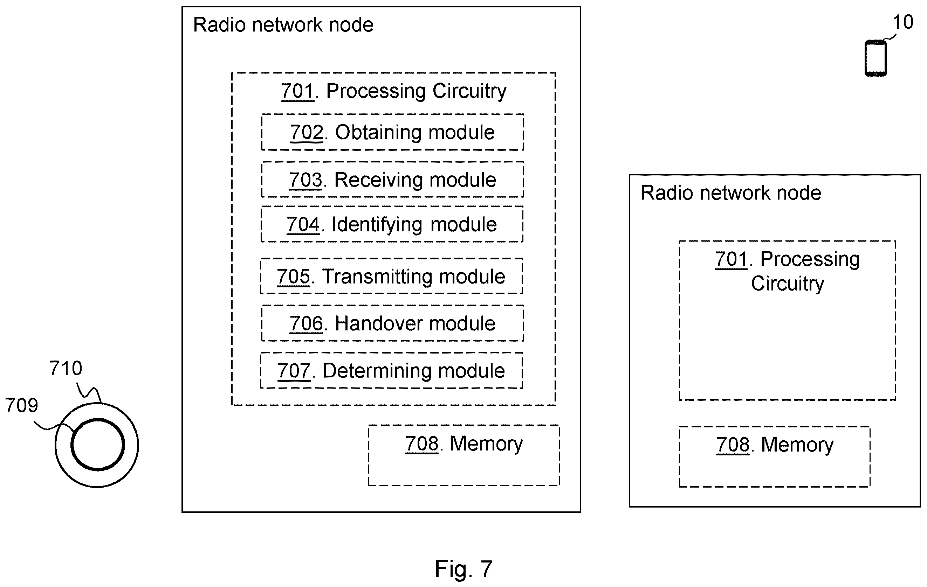

**Fig. 7** is a schematic block diagram depicting the radio network node, in two embodiments, such as the first radio network node 12 for facilitating beam selection for wireless devices in a wireless communications network e.g. managing beams transmitted by the first radio network node 12 in the wireless communications network.

The radio network node may comprise **a processing circuitry 701,** e.g. one or more processors, configured to perform the methods herein.

The radio network node may comprise **an obtaining module 702.** The radio network node, the processing circuitry 701, and/or the obtaining module 702 is configured to obtain the first parameter indicating a mapping between an uplink signal, US, sequence and a beam-formed reference signal, RS, which mapping is for two or more wireless devices that are configured to perform measurements on beam-formed reference signals and to use US sequences to report selected beams, and the second parameter distinguishing the US sequence being reported from one wireless device from the US sequence being reported from one or more other wireless devices. The radio network node, the processing circuitry 701, and/or the obtaining module 702 may be configured to obtain the first and second parameters by being configured to determine the first parameter and the second parameter

The radio network node may comprise **a receiving module 703,** e.g. a receiver or transceiver. The radio network node, the processing circuitry 701, and/or the receiving module 703 is configured to receive the indication of the US sequence transmitted from one of the two or more wireless devices.

The radio network node may comprise **an identifying module 704.** The radio network node, the processing circuitry 701, and/or the identifying module 704 is configured to identify the beam for the wireless device based on the received indication and the first and second parameters.

The second parameter may be the time offset, which separates, in time, transmissions of the US sequence from the two or more wireless devices; or the frequency offset, which separates, in frequency, transmissions of the US sequence from the two or more wireless devices. The second parameter may alternatively or additionally, be the indication to use the identity of each wireless device to distinguish the US sequences being transmitted from the two or more wireless devices, the radio network node, the processing circuitry 701, and/or the identifying module 704 may then be configured to identify the beam further based on the identity of the wireless device. The second parameter may alternatively or additionally, be the indicator to use the certain scrambling sequence or function for each wireless device, which scrambling sequence or function scrambles the US sequence differently for each wireless device and thereby distinguishing the US sequences being reported from the two or more wireless devices. Then the radio network node, the processing circuitry 701, and/or the receiving module 703 is configured to receive the indication of the US sequence by receiving the US sequence scrambled with the scrambling sequence or function and the radio network node 12, the processing circuitry 701, and/or the identifying module 704 may then be configured to identify the beam by taking the scrambling sequence or function into account.

The radio network node may comprise **a transmitting module 705,** e.g. a transmitter or a transceiver. The radio network node, the processing circuitry 701, and/or the transmitting module 705 may be configured to initiate the transmission toward the wireless device using the identified beam. The radio network node, the processing circuitry 701, and/or the transmitting module 705 may be configured to initiate the transmission by transmitting the indication of the US sequence for the wireless device to another radio network node.

The radio network node, the processing circuitry 701, and/or the receiving module 703 may be configured to receive the US sequence from the wireless device 10. The radio network node, the processing circuitry 701, and/or the transmitting module 705 may be configured to perform the transmission toward the wireless device using the identified beam.

The radio network node, the processing circuitry 701, and/or the transmitting module 705 may be configured to transmit the determined first parameter and/or the second parameter to the wireless device 10 and/or another radio network node such as the second radio network node 13.

The radio network node may comprise **a handover module 706.** The radio network node, the processing circuitry 701, and/or the receiving module 703 may be configured to receive the indication of the US sequence from another radio network node. The radio network node, the processing circuitry 701, and/or the handover module 706 may then be configured to perform a handover process of the wireless device to the beam based on the received indication.

The radio network node, the processing circuitry 701, and/or the obtaining module 702 may be configured to obtain that the US sequence is further mapped to the second beam-formed RS of the second beam. The radio network node may comprise a **determining module 707.** The radio network node, the processing circuitry 701, and/or the determining module 707 may be configured to determine the direction of arrival of the received US sequence. The radio network node, the processing circuitry 701, and/or the identifying module 704 may then be configured to identify the beam by being configured to determine whether the US sequence belongs to the reference signal or the second reference signal based on the determined direction of arrival. The second parameter may be the pattern shift of the mapping which pattern shift is based on the identity of the two or more wireless devices and thereby distinguishing the US sequences being reported from the two or more wireless devices.

The radio network node, the processing circuitry 701, and/or the receiving module 703 may be configured to receive the second indication indicating the second parameter.

The radio network node further comprises a **memory 708** comprising one or more memory units. The memory 708 comprises instructions executable by the processing circuitry 701 to perform the methods herein when being executed in the radio network node. The memory 708 is arranged to be used to store e.g. information, data such as US-RS mappings, second parameters, wireless device information, allocation information, configurations, etc.

The methods according to the embodiments described herein for the radio network node are respectively implemented by means of e.g. **a computer program 709** or a computer program product, comprising instructions, i.e., software code portions, which, when executed on at least one processor, cause the at least one processor to carry out the actions described herein, as performed by the radio network node. The computer program 709 may be stored on **a computer-readable storage medium 710,** e.g. a disc or similar. The computer-readable storage medium 710, having stored thereon the computer program, may comprise the instructions which, when executed on at least one processor, cause the at least one processor to carry out the actions described herein, as performed by the radio network node. In some embodiments, the computer-readable storage medium may be a non-transitory computer-readable storage medium. Thus, the radio network node may comprise the processing circuitry and the memory, said memory comprising instructions executable by said processing circuitry whereby said radio network node is operative to perform the methods herein.

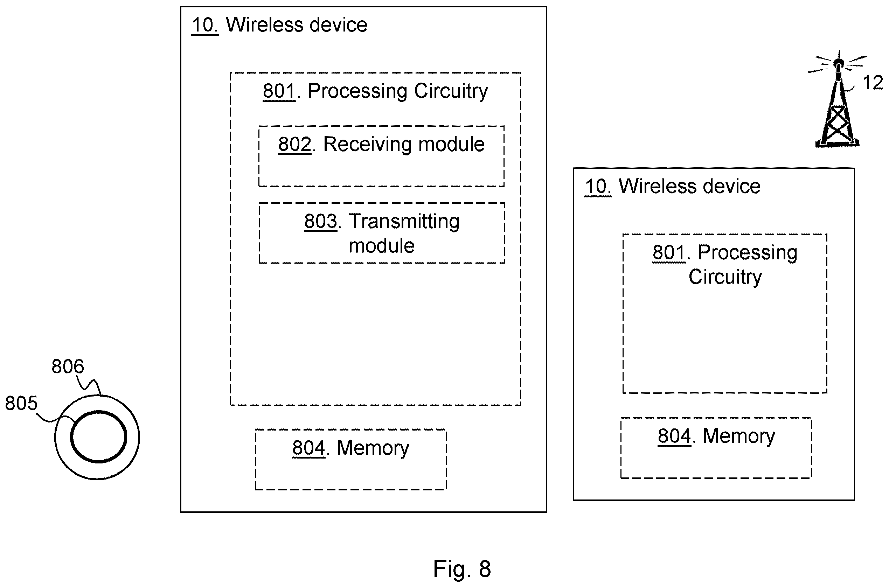

**Fig. 8** is a schematic block diagram depicting the wireless device 10, in two embodiments, for facilitating beam selection in a wireless communications network, which wireless device is configured to perform measurements on beam-formed reference signals, RS, and to use Uplink Signal, US, sequences to report selected beams.

The wireless device 10 may comprise **a processing circuitry 801,** e.g. one or more processors, configured to perform the methods herein.

The wireless device 10 may comprise **a receiving module 802,** e.g. a receiver or transceiver. The wireless device 10, the processing circuitry 801, and/or the receiving module is configured to receive the beam-formed RS.

The wireless device 10 may comprise **a transmitting module 803,** e.g. a transmitter or transceiver. The wireless device 10, the processing circuitry 801, and/or the transmitting module 803 is configured to perform the transmission of the US sequence to the radio network node, which US sequence is based on the first parameter indicating the mapping between the received beam-formed RS and the US sequence. The wireless device 10, the processing circuitry 801, and/or the transmitting module 803 is further configured to perform the transmission by taking the second parameter into account, which second parameter distinguishes the US sequence being reported from the wireless device from the same US sequence being reported from one or more other wireless devices. The second parameter may be the time offset and the the wireless device 10, the processing circuitry 801, and/or the transmitting module 803 may be configured to perform the transmission by transmitting the US sequence at the time based on the time offset. The second parameter may be the frequency offset and the wireless device 10, the processing circuitry 801, and/or the transmitting module 803 may be configured to perform the transmission by transmitting the US sequence in the frequency based on the frequency offset. The second parameter may be the indication to use the identity of the wireless device, wherein the wireless device 10, the processing circuitry 801, and/or the transmitting module 803 may be configured to add identity of the wireless device to the US sequence mapped to the received beam-formed RS and further being configured to transmit the US sequence with the added identity. The second parameter may be the indication to use the scrambling sequence or function for the wireless device, wherein the wireless device 10, the processing circuitry 801, and/or the transmitting module 803 may be configured to scramble the US sequence using the scrambling sequence or function.

The wireless device 10, the processing circuitry 801, and/or the receiving module 802 may be configured to receive the configuration, which configuration comprises the first parameter and/or the second parameter.

The wireless device 10, the processing circuitry 801, and/or the receiving module 802 may be configured to receive the transmission over the beam corresponding to the transmitted US sequence.

The wireless device 10, the processing circuitry 801, and/or the transmitting module 803 may be configured to use the US sequence also for the second beam-formed RS of the second beam. The wireless device 10, the processing circuitry 801, and/or the transmitting module 803 may be configured to transmit the US sequence when deciding to report the beam-formed RS or the second beam-formed RS.

The wireless device 10 further comprises a **memory 804** comprising one or more memory units. The memory 804 comprises instructions executable by the processing circuitry 801 to perform the methods herein when being executed in the wireless device 10. The memory 804 is arranged to be used to store e.g. information, data such as US sequences, US-RS mappings, second parameters, signal strengths, configurations, etc.

The methods according to the embodiments described herein for the wireless device 10 are respectively implemented by means of e.g. **a computer program 805** or a computer program product, comprising instructions, i.e., software code portions, which, when executed on at least one processor, cause the at least one processor to carry out the actions described herein, as performed by the wireless device 10. The computer program 805 may be stored on **a computer-readable storage medium 806,** e.g. a disc or similar. The computer-readable storage medium 806, having stored thereon the computer program, may comprise the instructions which, when executed on at least one processor, cause the at least one processor to carry out the actions described herein, as performed by the wireless device 10. In some embodiments, the computer-readable storage medium may be a non-transitory computer-readable storage medium. Thus, the wireless device 10 may comprise the processing circuitry and the memory, said memory comprising instructions executable by said processing circuitry whereby said wireless device is operative to perform the methods herein.

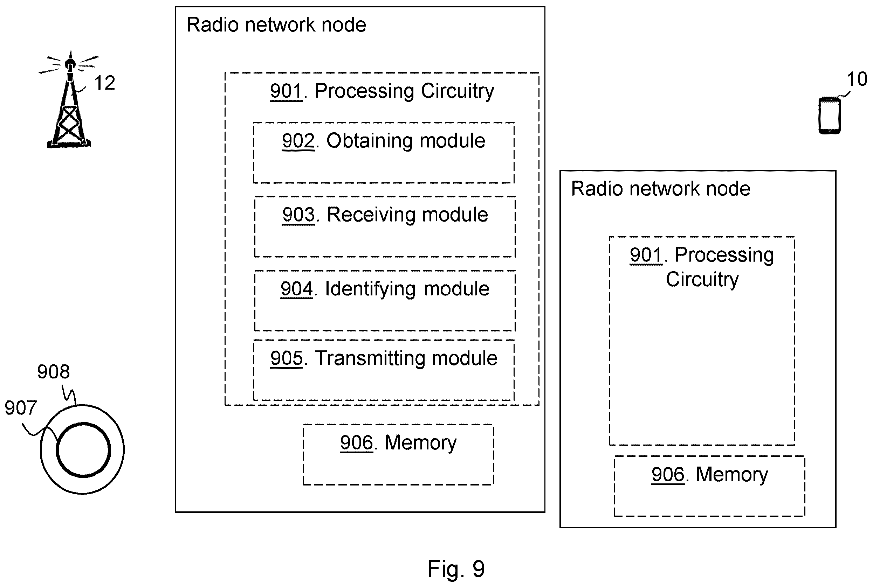

**Fig. 9** is a schematic block diagram depicting the radio network node, in two embodiments, such as the second radio network node 12 for facilitating beam selection toward wireless devices in the wireless communications network e.g. managing beams transmitted for the wireless device 10 in the wireless communications network.

The radio network node may comprise **a processing circuitry 901,** e.g. one or more processors, configured to perform the methods herein.

The radio network node may comprise **an obtaining module 902.** The radio network node, the processing circuitry 901, and/or the obtaining module 902 is configured to obtain the first parameter indicating the mapping between the US sequence and the beam-formed RS, which mapping is for two or more wireless devices that are configured to perform measurements on beam-formed reference signals and to use US sequences to report selected beams. The radio network node, the processing circuitry 901, and/or the obtaining module 902 is configured to further obtain the second parameter distinguishing the US sequence being reported from one wireless device, from the SS sequence being reported from one or more other wireless devices.

The radio network node may comprise **a receiving module 903.** The radio network node, the processing circuitry 901, and/or the receiving module 903 is configured to receive, from one wireless device of the two or more wireless devices, the US sequence.

The radio network node may comprise **an identifying module 904.** The radio network node, the processing circuitry 901, and/or the identifying module 904 is configured to identify, for the wireless device, the beam associated to the received US sequence based on the first parameter and the second parameter.

The radio network node may comprise **a transmitting module 905,** such as a transmitter transceiver. The radio network node, the processing circuitry 901, and/or the transmitting module 905 may be configured to transmit to the source radio network node the indication of the received US sequence. The radio network node, the processing circuitry 901, and/or the transmitting module 905 may be configured to transmit to the source radio network node the second indication indicating the second parameter. The radio network node, the processing circuitry 901, and/or the transmitting module 905 may be configured to perform the transmission toward the wireless device using the identified beam. The radio network node, the processing circuitry 901, and/or the receiving module 903 may be configured to receive the first parameter and/or the second parameter from the source radio network node in the wireless communications network.

The radio network node further comprises a **memory 906** comprising one or more memory units. The memory 906 comprises instructions executable by the processing circuitry 901 to perform the methods herein when being executed in the radio network node. The memory 906 is arranged to be used to store e.g. information, data such as US-RS mappings, second parameters, wireless device information, allocation information, configurations, etc.

The methods according to the embodiments described herein for the radio network node are respectively implemented by means of e.g. **a computer program 907** or a computer program product, comprising instructions, i.e., software code portions, which, when executed on at least one processor, cause the at least one processor to carry out the actions described herein, as performed by the radio network node. The computer program 907 may be stored on **a computer-readable storage medium 908,** e.g. a disc or similar. The computer-readable storage medium 908, having stored thereon the computer program, may comprise the instructions which, when executed on at least one processor, cause the at least one processor to carry out the actions described herein, as performed by the radio network node. In some embodiments, the computer-readable storage medium may be a non-transitory computer-readable storage medium. Thus, the radio network node may comprise the processing circuitry and the memory, said memory comprising instructions executable by said processing circuitry whereby said radio network node is operative to perform the methods herein.

In some embodiments a more general term "radio network node" is used and it can correspond to any type of radio network node or any network node, which communicates with a wireless device and/or with another network node. Examples of network nodes are NodeB, Master eNB, Secondary eNB, a network node belonging to Master cell group (MCG) or Secondary Cell Group (SCG), base station (BS), multistandard radio (MSR) radio node such as MSR BS, eNodeB, network controller, radio network controller (RNC), base station controller (BSC), relay, donor node controlling relay, base transceiver station (BTS), access point (AP), transmission points, transmission nodes, Remote Radio Unit (RRU), Remote Radio Head (RRH), nodes in distributed antenna system (DAS), core network node e.g. Mobility Switching Centre (MSC), Mobile Management Entity (MME) etc, Operation and Maintenance (O&M), Operation Support System (OSS), Self-Organizing Network (SON), positioning node e.g. Evolved Serving Mobile Location Centre (E-SMLC), Minimizing Drive Test (MDT) etc.

In some embodiments the non-limiting term wireless device or user equipment (UE) is used and it refers to any type of wireless device communicating with a network node and/or with another UE in a cellular or mobile communication system. Examples of UE are target device, device-to-device (D2D) UE, proximity capable UE (aka ProSe UE), machine type UE or UE capable of machine to machine (M2M) communication, Personal Digital Assistant (PDA), PAD, Tablet, mobile terminals, smart phone, laptop embedded equipped (LEE), laptop mounted equipment (LME), Universal Serial Bus (USB) dongles etc.

The embodiments are described for 5G. However the embodiments are applicable to any RAT or multi-RAT systems, where the UE receives and/or transmit signals (e.g. data) e.g. LTE, LTE FDD/TDD, WCDMA/HSPA, GSM/GERAN, Wi Fi, WLAN, CDMA2000 etc.

Measurement Reference Signal (MRS): As used herein, a "MRS" is any signal used for mobility measurements in beams. Thus, while the term "MRS" is used herein to refer a signal used herein, the term "MRS" is to be construed broadly to mean any signal, regardless of what the signal is named, e.g., in any particular standard, used for mobility measurements and, in particular, used according to the embodiments described herein. In some embodiments, a MRS is a mobility specific signal that is used for handover/beam switching purposes. This reference signal can be periodic or aperiodic. It can be configured to be wireless device specific or could be used common for more than one wireless device.

Antenna node: As used herein, an "antenna node" is a unit capable of producing one or more beams covering a specific service area or direction. An antenna node can be a base station, or a part of a base station.

As will be readily understood by those familiar with communications design, that functions means or modules may be implemented using digital logic and/or one or more microcontrollers, microprocessors, or other digital hardware. In some embodiments, several or all of the various functions may be implemented together, such as in a single application-specific integrated circuit (ASIC), or in two or more separate devices with appropriate hardware and/or software interfaces between them. Several of the functions may be implemented on a processor shared with other functional components of a wireless device or network node, for example.

Alternatively, several of the functional elements of the processing means discussed may be provided through the use of dedicated hardware, while others are provided with hardware for executing software, in association with the appropriate software or firmware. Thus, the term "processor" or "controller" as used herein does not exclusively refer to hardware capable of executing software and may implicitly include, without limitation, digital signal processor (DSP) hardware, read-only memory (ROM) for storing software, random-access memory for storing software and/or program or application data, and non-volatile memory. Other hardware, conventional and/or custom, may also be included. Designers of communications devices will appreciate the cost, performance, and maintenance tradeoffs inherent in these design choices.

It will be appreciated that the foregoing description and the accompanying drawings represent non-limiting examples of the methods and apparatus taught herein. As such, the apparatus and techniques taught herein are not limited by the foregoing description and accompanying drawings. Instead, the embodiments herein are limited only by the following claims and their legal equivalents.

## Claims

1. A method performed by a user equipment, UE, (10) for facilitating beam selection in a wireless communications network, the method comprising:
- receiving (501) a configuration, which configuration comprises a first parameter and a second parameter;
- receiving (502) one or more beam-formed Reference Signals, RS;
- selecting a beam-formed RS based on measured signal strength or quality of the received one or more beam-formed RS; and
- performing (504) a transmission of a random access preamble to a radio network node (12, 13), which random access preamble is based on the first parameter indicating a mapping between the selected beam-formed RS and the random access preamble, and the transmission is performed by taking the second parameter into account, which second parameter distinguishes the random access preamble being reported from the user equipment from the same random access preamble being reporting from one or more other user equipments.

2. The method according to claim 1, wherein the second parameter indicates a time offset and performing (504) the transmission comprises transmitting the random access preamble at a time based on the time offset.

3. The method according to claim 1, wherein the second parameter indicates a frequency offset and performing (504) the transmission comprises transmitting the random access preamble in a frequency based on the frequency offset.

4. The method according to any of the claims 1-3, further comprising:
- receiving (505) a transmission over the selected beam corresponding to the transmitted random access preamble.

5. The method according to any of the claims 1-4, further comprising:
- performing a handover procedure based on the random access preamble.

6. A method performed by a radio network node (12) for facilitating beam selection in a wireless communications network, the method comprising:
- sending, to a user equipment, UE, a configuration, which configuration comprises a first parameter and/or a second parameter;
- sending, to the UE, one or more beam formed Reference Signal, RS; and
- receiving, from the UE, a transmission of a random access preamble, which random access preamble is based on the first parameter indicating a mapping between a selected beam-formed RS and the random access preamble, and the transmission is performed by taking the second parameter into account, which second parameter distinguishes the random access preamble being reported from the user equipment from the same random access preamble being reporting from one or more other user equipments.

7. The method according to claim 5, wherein the second parameter indicates a time offset and the transmission of the random access preamble is at a time based on the time offset.

8. The method according to claim 5, wherein the second parameter indicates a frequency offset and the transmission of the random access preamble in a frequency based on the frequency offset.

9. The method according to any of claims 5-8, further comprises:
- sending a transmission over the beam corresponding to the transmitted random access preamble.

10. The method according to any of claims 5-9, further comprising:
- receiving an indication of the radio access preamble from a second radio network node; and
- performing a handover procedure of the user equipment to the selected beam formed RS based on the received indication.

11. A user equipment, UE, (10) for facilitating beam selection in a wireless communications network, the UE being configured to:
- receive a configuration, which configuration comprises a first parameter and a second parameter;
- receive one or more beam-formed Reference Signals, RS;
- select a beam-formed RS based on measured signal strength or quality of the received one or more beam-formed RS; and
- perform a transmission of a random access preamble to a radio network node (12, 13), which random access preamble is based on the first parameter indicating a mapping between the selected beam-formed RS and the random access preamble, and the transmission is performed by taking the second parameter into account, which second parameter distinguishes the random access preamble being reported from the user equipment from the same random access preamble being reporting from one or more other user equipments.

12. The UE according to claim 11, being configured to perform any of the step of claims 2-5.

13. A radio network node(12) for facilitating beam selection in a wireless communications network, the radio network node being configured to:
- send, to a user equipment, UE, a configuration, which configuration comprises a first parameter and/or a second parameter;
- send, to the UE, one or more beam formed Reference Signal, RS; and
- receive, from the UE, a transmission of a random access preamble, which random access preamble is based on the first parameter indicating a mapping between a selected beam-formed RS and the random access preamble, and the transmission is performed by taking the second parameter into account, which second parameter distinguishes the random access preamble being reported from the user equipment from the same random access preamble being reporting from one or more other user equipments.

14. The radio network node (12) according to claim 13 being configured to perform any of the step of claims 7-10.

15. A computer program comprising instructions, which, when executed on at least one processor, cause the at least one processor to carry out the method according to any of the claims 1-5, as performed by the User Equipment(10).

16. A computer-readable storage medium, having stored thereon a computer program comprising instructions which, when executed on at least one processor, cause the at least one processor to carry out the method according to any of the claims 1-5, as performed by the User Equipment (10).
